Europäisches Patentamt

European Patent Office

Office européen des brevets

(19)

(11) Veröffentlichungsnummer: **0 057 423**
**B1**

(12) **EUROPÄISCHE PATENTSCHRIFT**

(45) Veröffentlichungstag der Patentschrift:
**01.08.84**

(21) Anmeldenummer: **82100565.9**

(22) Anmeldetag: **28.01.82**

(51) Int. Cl.³: **C 04 B 21/06**, B 28 B 3/22,
C 04 B 33/13

(54) **Brennstoffhaltiger Ziegelformling.**

(30) Priorität: **31.01.81 DE 3103250**
**29.08.81 DE 3134284**
**21.12.81 DE 3150585**
**24.09.81 DE 8127904 U**

(43) Veröffentlichungstag der Anmeldung:
**11.08.82 Patentblatt 82/32**

(45) Bekanntmachung des Hinweises auf die Patenterteilung:
**01.08.84 Patentblatt 84/31**

(84) Benannte Vertragsstaaten:
**AT BE CH DE FR GB IT LI NL SE**

(56) Entgegenhaltungen:
**DE - A - 2 611 735**
**DE - A - 2 720 971**

(73) Patentinhaber: **Hässler, Andreas, Jahnstrasse 45,
D-7904 Erbach (DE)**

(72) Erfinder: **Hässler, Andreas, Jahnstrasse 45,
D-7904 Erbach (DE)**
Erfinder: **Morgante, Wilhelm, jun.,
Hohenstaufenstrasse 57, D-8900 Augsburg (DE)**

(74) Vertreter: **Thielking, Bodo, Dipl.-Ing. et al, Patentanwälte
Dipl.-Ing. Bodo Thielking Dipl.-Ing. Otto Elbertzhagen
Gadderbaumer Strasse 20, D-4800 Bielefeld 1 (DE)**

## Beschreibung

Die Erfindung betrifft einen brennstoffhaltigen Ziegelformling sowie ein Verfahren und eine Vorrichtung zu seiner Herstellung.

Brennstoffhaltige Ziegelformlinge sind bereits bekannt. Derartige Ziegelformlinge sind aus Ton hergestellt, dem man Festbrennstoff, z. B. Sägemehl oder Kohle, beigemischt hat. Das Sägemehl stellt dabei gleichzeitig ein Porosierungsmittel dar. Bei den bekannten derartigen Ziegelformlingen sind der Brennstoff und/oder das Porosierungsmittel gleichmässig im gesamten Ziegelformling verteilt. Es wurde versucht, dem Ziegelformling so viel Brennstoff bzw. Porosierungsmittel beizumischen, dass die Beimischung für den Brennprozess annähernd ausreicht. Versuche mit derartigen Ziegelformlingen zeigten jedoch, dass solche Ziegel beim Brennprozess nicht annähernd vollständig entgasen und Brennstoff in dem Ziegelformling zurückbleibt. Es hat sich ausserdem als wesentlicher Nachteil derartiger Ziegelformlinge erwiesen, dass sie nach dem Brand auf den Aussenseiten dunkle Reduktionsflecken aufweisen. Derartige Ziegel sind also wegen ihrer gefleckten Oberfläche nicht als Vormauerziegel verwendbar.

Es ist ferner versucht worden, Brennstoff in den Lochraum der Ziegelformlinge einzuführen. Auch diese Versuche waren nicht erfolgreich, weil der Brennstoff beim Hantieren mit den Formlingen bereits vor dem Brennprozess wieder aus dem Lochraum herausfiel. Ausserdem war es praktisch schwierig, Brennstoff in den Lochraum der Ziegelformlinge einzufüllen.

Wegen der hohen Kosten für Gas und Öl sind in jüngerer Zeit zahlreiche für Gas oder Öl projektierte Tunnelofenanlagen auf Kohlebeheizung umgestellt worden. Dies bringt jedoch erhebliche Beeinträchtigungen mit sich, da die Ofenanlagen von der Asche verschmutzt werden.

Ausgehend von diesem Stand der Technik liegt der Erfindung die Aufgabe zugrunde, einen Ziegelformling bzw. ein Verfahren und eine Vorrichtung zu dessen Herstellung zu schaffen, der die Nachteile des geschilderten Standes der Technik vermeidet und ein Brennen unter weitgehendem Verzicht auf Energiezufuhr von aussen ermöglicht. Es soll die Zufuhr auch von minderwertigen Brennstoffen möglich sein. Ferner soll die Oberfläche des gebrannten Ziegels bei Bedarf qualitativ so hochwertig sein, dass sich der gebrannte Ziegel auch als Vormauerziegel eignet, also eine gleichmässige, geschlossene Oberfläche aufweist.

Die Lösung dieser Aufgabe erfolgt nach der Erfindung dadurch, dass der brennstoffhaltige Ziegelformling in seinem Zentrum den höchsten Brennstoffanteil aufweist.

Dabei ist es zweckmässig, dass der Ziegelformling in seinem Zentrum am stärksten porosiert ist.

Ferner wird vorgeschlagen, dass der brennstoffhaltige Ziegelformling in seinen Randzonen nicht porosiert ist.

Gemäss einem weiteren Merkmal der Erfindung enthält der Brennstoff ein Porosierungsmittel.

Durch die Brennstoffkonzentration im Zentrum des Ziegelformlings wird es möglich, dem Ziegelformling ausreichend grosse Mengen an Brennstoff zuzufügen, ohne dabei die bisher auftretenden Nachteile von brennstoffhaltigen Ziegelformlingen in Kauf nehmen zu müssen.

Die Herstellung derartiger Ziegelformlinge erfolgt vorzugsweise in einer Strangpresse.

Gemäss einem weiteren Merkmal der Erfindung werden der Brennstoff und/oder das Porosierungsmittel in das Zentrum des Massestroms einer Strangpresse zugeführt. Demzufolge beschränkt sich die Verteilung des Brennstoffs und Porosierungsmittels auf das Zentrum des Tonstrangs. Da Strangpressen zu im wesentlichen radial verlaufenden Schichtungen des Tonstrangs führen, bleiben die Aussenzonen des aus dem Mundstück der Strangpresse austretenden Tonstrangs und damit die Formlinge an den Aussenzonen im wesentlichen frei von Brennstoff bzw. brennstoffhaltiger Masse. Durch diese Erscheinung ist die Voraussetzung dafür geschaffen, den brennstoffhaltigen Ziegelformlingen eine ausreichend grosse Menge auch von minderwertigem Brennstoff zuzuführen. Dabei ist darauf zu achten, dass bei der Lochziegelherstellung die Innenstege der Formlinge so gewählt werden, dass sie gut entgasen. Es ist dann ein leichtes Oxidieren des vornehmlich im Innenbereich der Ziegelformlinge angeordneten Brennstoffs erreichbar. Dies ist auch deshalb möglich, weil beim Aufschichten der Ziegel auf den Brennwagen dafür gesorgt werden kann, dass eine ausreichende Verbrennungsluftmenge den Brennstoff erreicht.

Mit dem erfindungsgemässen Verfahren wird es möglich, auch minderwertige, in grosser Menge anfallende Energie zu verwerten. Es eignen sich z.B. die bei der Kohleförderung anfallenden Waschberge mit einem Energieinhalt von ca. 4000 bis 8000 kg.

Es ist auch möglich, dem Zentrum des Massestroms oder des Tonstrangs eine brennstoffhaltige und/oder porosierungsmittelhaltige Masse zuzuführen.

Diese Masse kann beispielsweise mit Brennstoff und/oder Porosierungsmittel vorgemischter Ton sein.

Ebenso ist es mögich, gemäss einem weiteren Merkmal der Erfindung, die brennstoffhaltige zugeführte Tonmasse unter Vakuum zuzuführen. Dies ist insbesondere zweckmässig, wenn unter Vakuum verformt wird.

Es hat sich als zweckmässig erwiesen, dass bei einer Vorrichtung zur Durchführung des erfindungsgemässen Verfahrens die Mündung einer Zuführeinrichtung für Brennstoff und/oder Porosierungsmittel in dem Presszylinder einer Schnekkenpresse angeordnet ist.

Dabei ist in vorteilhafter Weise die Mündung in der Nähe der Schneckennabe angeordnet und der Schneckengang weist im Bereich der Mündung eine Aussparung auf. Diese Anordnung erlaubt ein Einspeisen des Brennstoffs und/oder des Porosierungsmittels praktisch in das Zentrum des Massestroms und damit praktisch in das Zentrum des Tonstrangs.

Schliesslich wird vorgeschlagen, dass die Zuführeinrichtung eine Mischeinrichtung zum Vormischen von Brennstoff und/oder Porosierungsmittel mit Ton aufweist.

Das Einführen des Brennstoffs in das Zentrum der Schneckenpresse erfolgt vorteilhaft in den Bereichen zwischen Einspeisung in den Schneckengang und vor der Verdichtungszone, ist jedoch nicht darauf beschränkt. Die Zufuhrmenge des Brennstoffs in das Zentrum der Strangpresse kann in Abhängigkeit von der Austrittsgeschwindigkeit des Tonstrangs aus der Schneckenpresse geregelt werden. Die Zuführung des Brennstoffs oder brennstoffhaltigen Gemisches in das Zentrum des Massestrangs der Schneckenpresse erfolgt mittels an sich bekannter Förderorgane, z.B. mittels radial in den Schneckengang mündender Förderrohre, an die als Zuführeinrichtungen bekannte Pressen angeschlossen sind. Die Zuführeinrichtungen müssen dem einzupressenden Brennstoff und/oder Porosierungsmittel einen Druck vermitteln, der zum Eindringen in den Massestrom der Schneckenpresse ausreicht, also höher liegt als der am Eintrittsort in die Schneckenpresse herrschende Druck.

Nachstehend wird eine bevorzugte Ausführungsform der Erfindung anhand der Zeichnung beschrieben. Es zeigen:

Fig. 1 eine Draufsicht auf eine Schneckenpresse für Ton mit einer Zuführeinrichtung für Brennstoff,

Fig. 2 eine Frontansicht auf die Vorrichtung gemäss Fig. 1, bei der der linke Bereich weggelassen ist,

Fig. 3 eine Ansicht auf eine Schnittfläche eines brennstoffhaltigen Ziegelformlings.

Die Strang- oder Schneckenpresse 1 besitzt einen Einwurf 5, durch den der Ton in einen Presszylinder 8 gelangt. Im Presszylinder 8 dreht sich die Schnecke 16 um die Achse 17 einer Schneckennabe 10.

Im dargestellten Ausführungsbeispiel sind zwei gleiche Zuführeinrichtungen 2 bzw. 2a in Richtung der Drehachse 17 hintereinander angeordnet. Die Zuführeinrichtungen 2 bzw. 2a werden mit Brennstoff oder brennstoffhaltigem Gemisch 7 beschickt. Sie besitzen Einführungsorgane 9, die mit ihrer Mündung 9a in unmittelbarer Nähe der Schneckennabe 10 enden. Die Einführorgane 9 sind in radialer Richtung auf die Drehachse 17 gerichtet. Auf der Schneckennabe 10 ist der nur schematisch dargestellte Schneckengang 18 der Schnecke 16 angeordnet. Im Bereich der Einführorgane 9 ist der Schneckengang 18 unterbrochen, so dass die Einführorgane 9 bis in die Nähe der Schneckennabe 10 geführt werden können.

Brennstoff bzw. brennstoffhaltiges Gemisch 7 gelangt über die Zuführeinrichtungen 2 bzw. 2a, also über Pressen durch die Einführorgane 9 in das Zentrum des Massestroms 4. Der Massestrom 4 verlässt mit im Zentrum 3 angereichertem Brennstoff die Schneckenpresse 1 in Form des Tonstrangs 11 durch das Mundstück 6. Hinter dem Mundstück 6 werden aus dem Tonstrang 11 Formlinge 12 bzw. Batzen mittels bekannter Schneidevorrichtungen 13 geschnitten. Auch beim Nachpressen der im Zentrum brennstoffhaltigen Batzen bleibt der Brennstoff in den daraus nachgepressten Formlingen im Zentrum und gelangt nur an zwei Seiten der nachgepressten Formlinge an die Formlingsoberfläche.

Die Formlinge werden entsprechend in die Nachpresseinrichtung eingelegt, so dass die brennstoffhaltigen Schnittflächen der Batzen, z.B. die späteren Vermörtelungsflächen der nachgepressten Formlinge, ergeben.

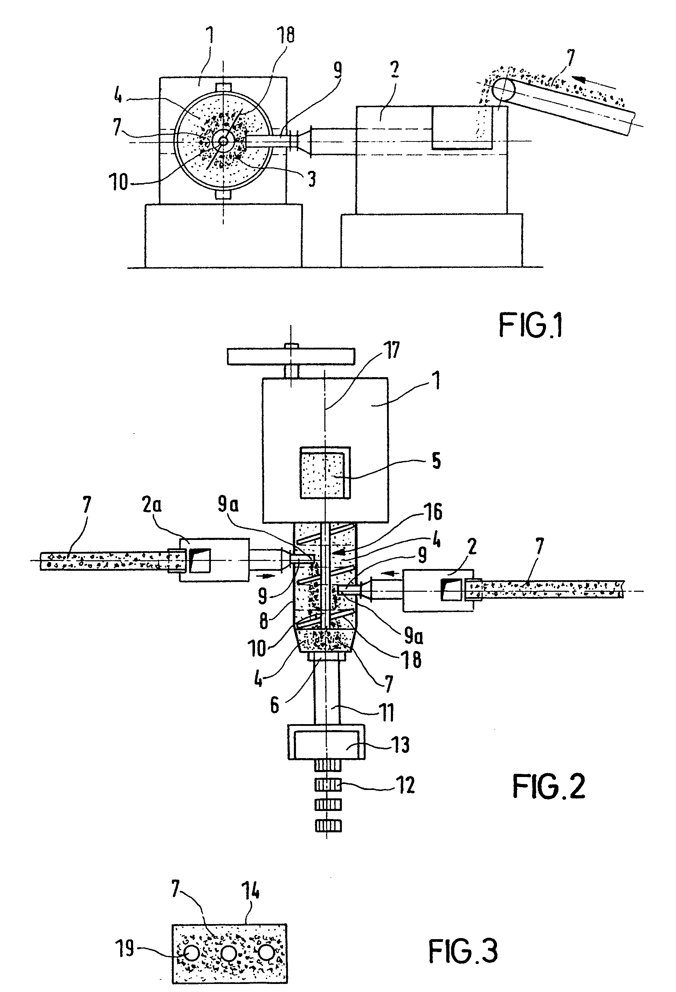

In Fig. 3 ist die Schnittfläche eines aus dem Tonstrang 11 geschnittenen Formlings dargestellt. Die Konzentration des Brennstoffs 7 im Zentrum des Formlings 11 und in der Nähe der Lochräume 19 ist deutlich sichtbar. An der ringsum verlaufenden Oberfläche 14 befindet sich weder Brennstoff noch Porosierungsmittel.

Das beschriebene Verfahren und die Vorrichtung zu seiner Durchführung dienen für nicht geblähte, stranggepresste oder vorgepresste Ziegelformlinge.

## Patentansprüche

1. Brennstoffhaltiger Ziegelformling, dadurch gekennzeichnet, dass er in seinem Zentrum den höchsten Brennstoffanteil aufweist.

2. Brennstoffhaltiger Ziegel nach Anspruch 1, dadurch gekennzeichnet, dass er in seinem Zentrum am stärksten porosiert ist.

3. Brennstoffhaltiger Ziegel nach einem der beiden Ansprüche 1 oder 2, dadurch gekennzeichnet, dass er in seinen Randzonen weder Brennstoff noch Porosierungsmittel aufweist.

4. Brennstoffhaltiger Ziegelformling nach einem oder mehreren der Ansprüche 1 bis 3, dadurch gekennzeichnet, dass der Brennstoff ein Porosierungsmittel enthält.

5. Verfahren zum Herstellen von brennstoffhaltigen Ziegelformlingen nach einem oder mehreren der Ansprüche 1 bis 4, dadurch gekennzeichnet, dass der Brennstoff und/oder das Porosierungsmittel in das Zentrum des Massestroms einer Strangpresse zugeführt wird.

6. Verfahren nach Anspruch 5, dadurch gekennzeichnet, dass dem Zentrum des Massestroms der Strangpresse eine brennstoff- und/oder porosierungsmittelhaltige Masse zugeführt wird.

7. Verfahren nach Anspruch 6, dadurch gekennzeichnet, dass die zugeführte Masse mit Brennstoff und/oder Porosierungsmittel vorgemischter Ton ist.

8. Verfahren nach Anspruch 7, dadurch gekennzeichnet, dass die Zufuhr der Masse unter Vakuum erfolgt.

9. Vorrichtung zur Herstellung von Ziegeln nach einem oder mehreren der Ansprüche 1 bis 4, gemäss Verfahren nach einem oder mehreren der Ansprüche 5 bis 8, dadurch gekennzeichnet, dass die Mündung (9a) einer Zuführeinrichtung (2) für Brennstoff und/oder Porosierungsmittel in dem Presszylinder (8) einer Schneckenpresse (1) angeordnet ist.

10. Vorrichtung nach Anspruch 9, dadurch gekennzeichnet, dass die Mündung (9a) in der Nähe der Schneckennabe (10) angeordnet ist und der Schneckengang im Bereich der Mündung eine Aussparung aufweist.

11. Vorrichtung nach den Ansprüchen 9 und 10, dadurch gekennzeichnet, dass die Zuführeinrichtung (2) eine Mischeinrichtung zum Vormischen von Brennstoff und/oder Porosierungsmittel mit Ton aufweist.

## Claims

1. Fuel-containing green brick, characterised in that it has the highest proportion of fuel in its centre.

2. Fuel-containing brick according to Claim 1, characterised in that it has been made most highly porous in its centre.

3. Fuel-containing brick according to Claim 1 or 2, characterised in that it has neither fuel nor porosity agent in its marginal zones.

4. Fuel-containing green brick according to one or more of Claims 1 to 3, characterised in that the fuel contains a porosity agent.

5. Process for manufacturing fuel-containing green bricks according to one or more of Claims 1 to 4, characterised in that the fuel and/or the porosity agent is fed into the centre of the stream of material in an extruder.

6. Process according to Claim 5, characterised in that a material which contains fuel and/or porosity agent is fed to the centre of the stream of material in an extruder.

7. Process according to Claim 6, characterised in that the material fed in is clay premixed with fuel and/or porosity agent.

8. Process according to Claim 7, characterised in that the material is fed in under vacuum.

9. Equipment for manufacturing bricks according to one or more of Claims 1 to 4 by a process according to one or more of Claims 5 to 8, characterised in that the outlet (9a) of a feed device (2) for fuel and/or porosity agent is located in the pressing cylinder (8) of a screw press (1).

10. Equipment according to Claim 9, characterised in that the outlet (9a) is located in the vicinity of the screw hub (10) and the screw thread has a recess in the region of the outlet.

11. Equipment according to Claims 9 and 10, characterised in that the feed device (2) has a mixing device for premixing fuel and/or porosity agent with clay.

## Revendications

1. Ebauche de brique contenant du combustible, caractérisée en ce qu'elle présente la majeure partie du combustible concentrée en son milieu.

2. Brique contenant du combustible, selon la revendication 1, caractérisée en ce qu'elle présente une porosité maximale en son milieu.

3. Brique contenant du combustible, selon l'une des revendications 1 ou 2, caractérisée en ce que ces zones périphériques ne contiennent ni combustible ni agent porogène.

4. Ebauche de brique contenant du combustible, selon une ou plusieurs des revendications 1 à 3, caractérisée en ce que le combustible contient un agent porogène.

5. Procédé pour la fabrication d'ébauches de briques contenant du combustible, selon une ou plusieurs des revendications 1 à 4, caractérisé en ce que le combustible et/ou l'agent porogène sont introduits au centre de l'écoulement de matières d'une presse d'extrusion.

6. Procédé selon la revendication 5, caractérisé en ce qu'une masse contenant du combustible et/ou un agent porogène est introduite au centre de l'écoulement de matières de la presse d'extrusion.

7. Procédé selon la revendication 6, caractérisé en ce que la masse introduite est de l'argile mélangée au préalable avec un combustible et/ou un agent porogène.

8. Procédé selon la revendication 7, caractérisé en ce que l'adduction de la masse s'effectue sous vide.

9. Dispositif pour la fabrication de briques selon une ou plusieurs des revendications 1 à 4, conformément au procédé selon une ou plusieurs des revendications 5 à 8, caractérisé en ce que l'orifice (9a) d'un dispositif d'apport (2) pour combustible et/ou agent porogène est placé dans le cylindre de presse (8) d'une presse d'extrusion à vis (1).

10. Dispositif selon la revendication 9, caractérisé en ce que l'orifice (9a) est disposé à proximité du moyeu de la vis (10) et que l'hélice de la vis présente un évidement dans la zone de l'orifice.

11. Dispositif selon les revendications 9 et 10, caractérisé en ce que le dispositif d'adduction (2) est pourvu d'un dispositif de mélange en vue du mélange préalable du combustible et/ou de l'agent porogène avec de l'argile.

FIG.1

FIG.2

FIG.3